# EUROPEAN PATENT APPLICATION

(11) **EP 4 766 002 A1**
(43) Date of publication of application: **24.06.2026**
(21) Application number: 24221793.3
(22) Date of filing: 19.12.2024
(51) Int. Cl.: H04W 74/0816, H04W 84/12

(54) **TXOP PRE-EMPTION**

(71) Applicant: Koninklijke Philips N.V., 5656 AE Eindhoven (NL)
(72) Inventor: DAVIES, Robert James, Eindhoven (NL); SMEARS, Nicholas, Eindhoven (NL)
(74) Representative: Philips Intellectual Property & Standards

(57) **Abstract**

There is provided methods and devices arranged for the controlling media access in a wireless network. The wireless network may comprise a first device allowing a pre-emption of part of a reservation it holds. A second device may send a request to use the pre-emption. In a message, the first device sends, there is a duration in which the pre-emption is allowed. Upon expiry or the receipt of a message indicating that the second device has finished with the pre-emption, the first device may access the wireless medium.

## Description

### FIELD OF THE INVENTION

The present invention relates to wireless networks, in particular local networks such as those using the IEEE 802.11 standard.

### BACKGROUND OF THE INVENTION

Wireless networks are frequently very busy with many devices needing to transmit. The heavy occupation of the wireless medium can result in unacceptable delays or latency for some high importance transmissions. Devices in such networks may obtain access to the medium for certain periods in various ways, such as by sensing the medium and starting a transmission. This gives the device a period in which it is allowed to complete its transmission without other devices sending transmissions that collide with those of the device in question. In IEEE 802.11, the period of freedom to transmit is known as a Transmission Opportunity or TXOP. It may occur that while the device transmitting (the TXOP holder in IEEE 802.11 terminology), other device may receive higher priority data in their buffers.

### SUMMARY OF THE INVENTION

The inventors have realized that though pre-emption may be useful, it could also lead to performance degradations if not limited. Therefore, aspects, embodiments and variants of the invention are defined in the appended claims.

In an aspect, there is a method of controlling wireless medium access in a wireless network, the network comprising a first device and a second device. The method may comprise transmitting by the first device to the second device, a first message containing a pre-emption allowed indication, transmitting, during the pre-emption duration, by the second device a second message, the second message containing a pre-emption request, the pre-emption request starting a pre-emption period. At least one of the first or second messages contains a pre-emption duration for the pre-emption period. The first device may be arranged to access the wireless medium upon expiry of the pre-emption duration. The advantage of having a duration is that the first device is that the time the first device is locked out (of what was going to be a period it could use) is limited. Thus reducing the risk that it too has traffic it needs to send.

It is also possible to have the second device transmit, during the pre-emption duration a third message during the pre-emption duration, wherein the third message contains a pre-emption end indication. The first device may be arranged to access the wireless medium upon the first to occur of the expiry of the pre-emption duration and the reception, by the first device, of the third message. This has the further advantage of reducing an unnecessary wait for the first device.

There is also provided a device (acting as STA1), arranged to control wireless medium access in a wireless network, the network comprising the device and a second device, wherein the first device is arranged to acquire a reservation for access to the wireless medium, the reservation having a reservation period. The first device comprises a processor, wherein the processor is arranged to cause the first device to transmit to the second device, a first message containing a pre-emption allowed indication, to receive, from the second device, a second message, the second message containing a pre-emption request, the pre-emption request starting a pre-emption period, wherein the device is arranged to not initiate access to the wireless medium during the pre-emption period. At least one of the first or second messages may contain a pre-emption duration for the pre-emption period, wherein the pre-emption period lies within the reservation period and the first device is arranged to access the wireless medium upon expiry of the pre-emption duration.

In an aspect there is provided, a computer program product, storable on a computer-readable medium and arranged, when run a computer to execute the method disclosed herein.

### BRIEF DESCRIPTION OF THE DRAWINGS

Examples of several of the various embodiments of the present disclosure are described herein with reference to the drawings wherein:
Fig. 1 represents a wireless network;
Fig. 2 represents a frame (i.e. message) exchange in the wireless network of Fig. 1;
Fig. 3 represents a frame exchange where pre-emption is used.
Fig. 4 represents a frame exchange according to an embodiment.
Fig. 5 represents a frame exchange according to an embodiment.
Fig. 6 represents a frame exchange according to an embodiment.
Fig. 7 represents a frame exchange according to an embodiment.
Fig. 8 represents a frame exchange according to an embodiment.
Fig. 9 represents a frame exchange according to an embodiment.
Fig. 10 represents frame structures according to an embodiment.

### DETAILED DESCRIPTION

In the appended figures, same references designate same elements.

In the present disclosure, various embodiments are presented as examples of how the disclosed techniques may be implemented and/or how the disclosed techniques may be practiced in environments and scenarios. It will be apparent to persons skilled in the relevant art that various changes in form and detail can be made therein without departing from the scope. After reading the description, it will be apparent to one skilled in the relevant art how to implement alternative embodiments. The present embodiments may not be limited by any of the described exemplary embodiments. The embodiments of the present disclosure will be described with reference to the accompanying drawings. Limitations, features, and/or elements from the disclosed example embodiments may be combined to create further embodiments within the scope of the disclosure. Any figures which highlight the functionality and advantages, are presented for example purposes only. The disclosed architecture is sufficiently flexible and configurable, such that it may be utilized in ways other than that shown. For example, the actions listed in any flowchart may be re-ordered or only optionally used in some embodiments.

Embodiments may be configured to operate as needed. The disclosed mechanism may be performed when certain criteria are met, for example, in a station, an access point, a radio environment, a network, a combination of the above, and/or the like. Example criteria may be based, at least in part, on for example, wireless device or network node configurations, traffic load, initial system set up, packet sizes, traffic characteristics, a combination of the above, and/or the like. When the one or more criteria are met, various example embodiments may be applied. Therefore, it may be possible to implement example embodiments that selectively implement disclosed protocols.

In this disclosure, "a" and "an" and similar phrases are to be interpreted as "at least one" and "one or more." Similarly, any term that ends with the suffix "(s)" is to be interpreted as "at least one" and "one or more." In this disclosure, the term "may" is to be interpreted as "may, for example." In other words, the term "may" is indicative that the phrase following the term "may" is an example of one of a multitude of suitable possibilities that may, or may not, be employed by one or more of the various embodiments. The terms "comprises" and "consists of", as used herein, enumerate one or more components of the element being described. The term "comprises" is interchangeable with "includes" and does not exclude unenumerated components from being included in the element being described. By contrast, "consists of" provides a complete enumeration of the one or more components of the element being described. The term "based on", as used herein, may be interpreted as "based at least in part on" rather than, for example, "based solely on". The term "and/or" as used herein represents any possible combination of enumerated elements. For example, "A, B, and/or C" may represent A; B; C; A and B; A and C; B and C; or A, B, and C.

If A and B are sets and every element of A is an element of B, A is called a subset of B. In this specification, only non-empty sets and subsets are considered. For example, possible subsets ofB = {STA1, STA2} are: {STA1}, {STA2}, and {STA1, STA2}. The phrase "based on" (or equally "based at least on") is indicative that the phrase following the term "based on" is an example of one of a multitude of suitable possibilities that may, or may not, be employed to one or more of the various embodiments. The phrase "in response to" (or equally "in response at least to") is indicative that the phrase following the phrase "in response to" is an example of one of a multitude of suitable possibilities that may, or may not, be employed to one or more of the various embodiments. The phrase "depending on" (or equally "depending at least to") is indicative that the phrase following the phrase "depending on" is an example of one of a multitude of suitable possibilities that may, or may not, be employed to one or more of the various embodiments. The phrase "employing/using" (or equally "employing/using at least") is indicative that the phrase following the phrase "employing/using" is an example of one of a multitude of suitable possibilities that may, or may not, be employed to one or more of the various embodiments.

The term configured may relate to the capacity of a device whether the device is in an operational or non-operational state. Configured may refer to specific settings in a device that effect the operational characteristics of the device whether the device is in an operational or non-operational state. In other words, the hardware, software, firmware, registers, memory values, and/or the like may be "configured" within a device, whether the device is in an operational or nonoperational state, to provide the device with specific characteristics. Terms such as "a control message to cause in a device" may mean that a control message has parameters that may be used to configure specific characteristics or may be used to implement certain actions in the device, whether the device is in an operational or non-operational state.

In this disclosure, parameters (or equally called, fields, or Information elements: IEs) may comprise one or more information objects, and an information object may comprise one or more other objects. For example, if parameter (IE) N comprises parameter (IE) M, and parameter (IE) M comprises parameter (IE) K, and parameter (IE) K comprises parameter (information element) J. Then, for example, N comprises K, and N comprises J. In an example embodiment, when one or more messages/frames comprise a plurality of parameters, it implies that a parameter in the plurality of parameters is in at least one of the one or more messages/frames but does not have to be in each of the one or more messages/frames.

Many features presented are described as being optional through the use of "may" or the use of parentheses. For the sake of brevity and legibility, the present disclosure does not explicitly recite each and every permutation that may be obtained by choosing from the set of optional features. The present disclosure is to be interpreted as explicitly disclosing all such permutations. For example, a system described as having three optional features may be embodied in seven ways, namely with just one of the three possible features, with any two of the three possible features or with three of the three possible features.

Many of the elements described in the disclosed embodiments may be implemented as modules. A module is defined here as an element that performs a defined function and has a defined interface to other elements. The modules described in this disclosure may be implemented in hardware, software in combination with hardware, firmware, wetware (e.g., hardware with a biological element) or a combination thereof, which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. It may be possible to implement modules using physical hardware that incorporates discrete or programmable analog, digital and/or quantum hardware. Examples of programmable hardware comprise computers, microcontrollers, microprocessors, application-specific integrated circuits (ASICs); field programmable gate arrays (FPGAs); and complex programmable logic devices (CPLDs). Computers, microcontrollers, and microprocessors are programmed using languages such as assembly, C, C++ or the like. FPGAs, ASICs and CPLDs are often programmed using hardware description languages (HDL) such as VHSIC hardware description language (VHDL) or Verilog that configure connections between internal hardware modules with lesser functionality on a programmable device. The mentioned technologies are often used in combination to achieve the result of a functional module.

It is desirable for wireless networks to handle low latency traffic. IEEE 802.11bn, currently under development, has such a goal. Such traffic can be characterized by the presence of PPDUs that need to be delivered urgently within a short delay bound and which therefore may need to pre-empt or take priority over traffic with longer or no latency bounds. The present disclosure is described in the context, and uses terminology from, the IEEE 802.11 standard. Those skilled in the art will be able to apply the teaching to other types of wireless network.

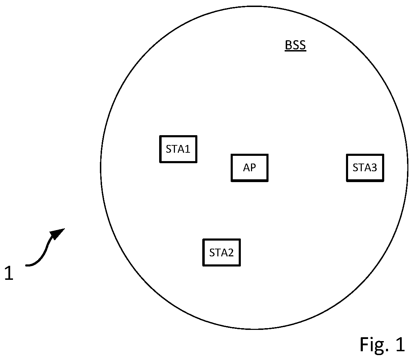

Fig.1 represents a wireless network 1 where an AP (AP), and first, second and third STAs (STA1, STA2, STA3) is communicating. In IEEE 802.11, this is known as a Basic Service Set (BSS).

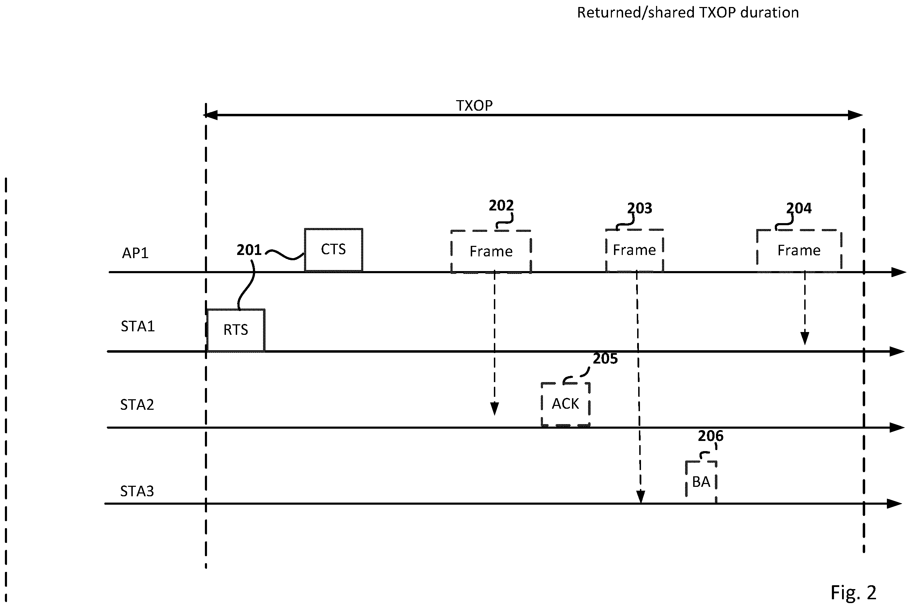

Fig. 2 represents a situation where STA1 has obtained access to the medium for a period (TXOP) by using an RTS/CTS exchange 201. The TXOP may be considered as a reservation period - because STA1 is a TXOP holder, STA2 and STA3 cannot transmit and the AP cannot communicate with them- as an example, frames 2002 to 2006 are blocked from transmission. Some of these frames may contain high priority, and in particular, low-latency data. It is undesirable, that low-latency data be blocked from transmission. In wireless networks, devices sometimes are equipped with timers which they use to determine when to attempt transmission. For example, transmission may be inhibited until expiry of the counter. In the case of IEEE 802.11, the counter is called a Network Allocation Vector (NAV).

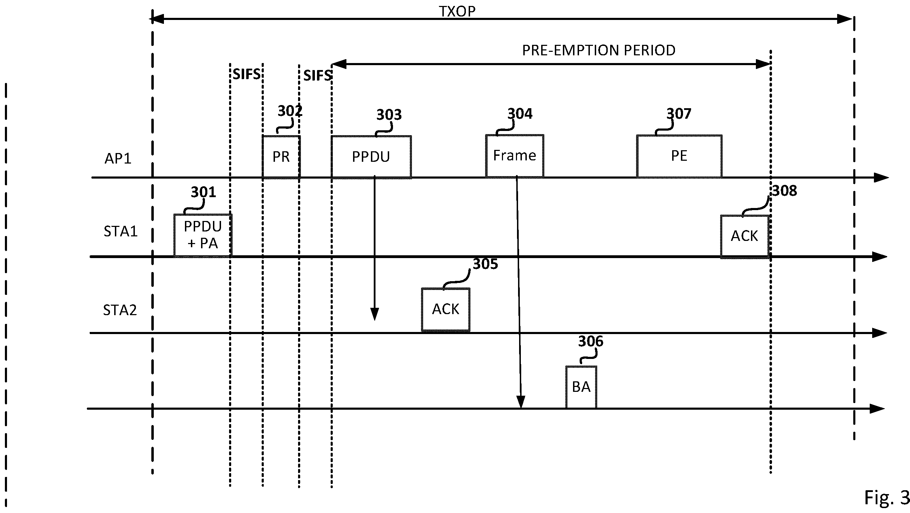

It should be understood that the in the examples, including those of embodiments and variants, the time the TXOP starts is not important - what matters is that it is in place at the start of the frame exchanges described. Therefore, the start boundary is merely illustrative. Fig. 3 represents the use of a mechanism called pre-emption; whereby high priority data (such as low-latency) may be transmitted by other STA's than the TXOP holder. STA1, the TXOP holder, transmits a PPDU 301 which may contain, along with other information and/or data, an indication (Pre-Emption Allowed or PA) that pre-emption would be allowed. If another STA, for example the AP, wishes to take advantage of pre-emption, within a time period (such as a Short Interframe Space or SIFS), it transmits a Pre-emption Request (PR) 302. Then, after another period (such as a SIFS), frame exchanges, such 303 to 306 may occur between the AP and STA2 and STA3. When the AP has finished the Down Link (DL) transmissions, it sends a Pre-emption End (PE) frame 307 to STA1 which replies with an Acknowledgement frame (ACK) 308 at which point STA1 recovers (what is left of) its TXOP. This presents a problem in that STA1 is thus preempted from using its TXOP for the duration until the AP has released the TXOP. STA1 itself may have received high priority data in its buffer during this period - this data will have to wait until the end of the TXOP to be transmitted. It should be understood that the example here uses DL frame exchanges. It is also possible that the AP may coordinate up-link (UL) frame exchanges.

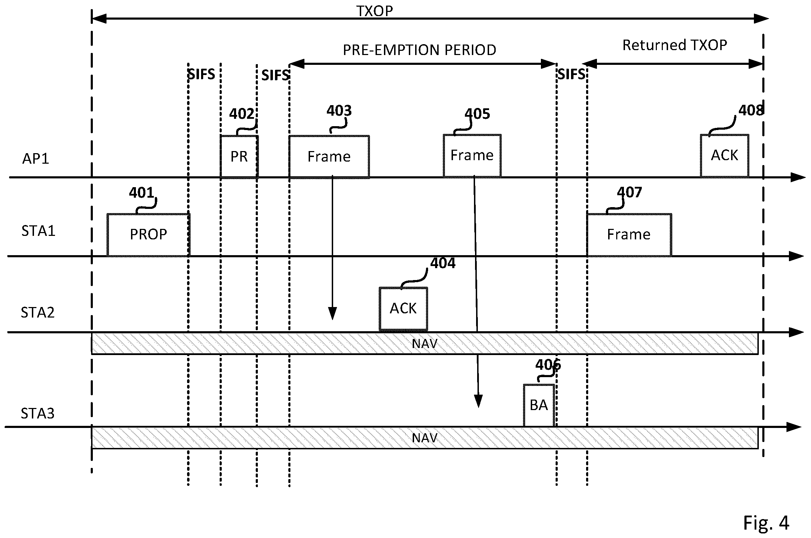

Fig. 4 represents a use of pre-emption according to an embodiment. STA1 obtains a TXOP with the transmission of a PPDU 401. The PPDU contains a Pre-emption Opportunity (PROP) indication. There may also be present, in the PPDU 401, data and other information. In a variant, the PPDU 401 is followed by a PROP frame (i.e. a frame arranged specifically to carry the PROP indication). In a variant, the PROP indication contains a first duration field which indicates the time period during which pre-emption is allowed and is expected to be completed within For convenience, this period may be named the Pre-emption Allowed Duration (PAD). In a variant, the PAD within the PROP alternatively or additionally contains a second duration field which indicates the time period within which a pre-emption should start; if no pre-emption is started within the second duration then STA1 may resume control of the TXOP. As in Fig. 3, the AP (in this example), sends a PR frame after a time period (e.g. a SIFS) which has the effect of giving the AP control of the medium. In a variant, STA2 and STA3 have set the NAVs to the duration of the original TXOP whereas the pre-emption requester (the AP, in this example) sets its NAV to a value equal to the (TXOP duration - PAD) but only does this after the expiration of the PAD. After another time period (e.g. another SIFS), the AP completes frame exchanges 403 to 406. The pre-emption period ends and then STA1 can use its TXOP again. After an interframe space (e.g. a SIFS) STA1 transmits a frame 407 without having to re-obtain the TXOP this means without having to contend for access) because the other STAs have set their NAVs accordingly. In the present example, frame 407 is an UL frame to which the AP responds with an ACK 408. The advantage here is that STA1 still gets a chance to transmit some (urgent) data.

In a variant, the PAD value may be set to a fixed value and may be negotiated between a STA and the AP via other previous frame exchanges (such as during association or as part of a management operation). In another variant, the PAD value may be based on a characteristic of recent and/or expected traffic to and/or from the device making the PROP indication - for example if the traffic has been mostly low priority traffic or only low priority traffic is expected, a higher value could be used. In another variant, the PAD value may be communicated as a fixed value which the pre-emption requesting device combines with a characteristic of the traffic it expects to send to derive an actual value which it includes in the pre-emption request 402, 902. In a further variant, the duration value in the pre-emption request (PR) 402, 902 is calculated by the requesting device and the PAD value in the PROP indication 401 acts as a maximum.

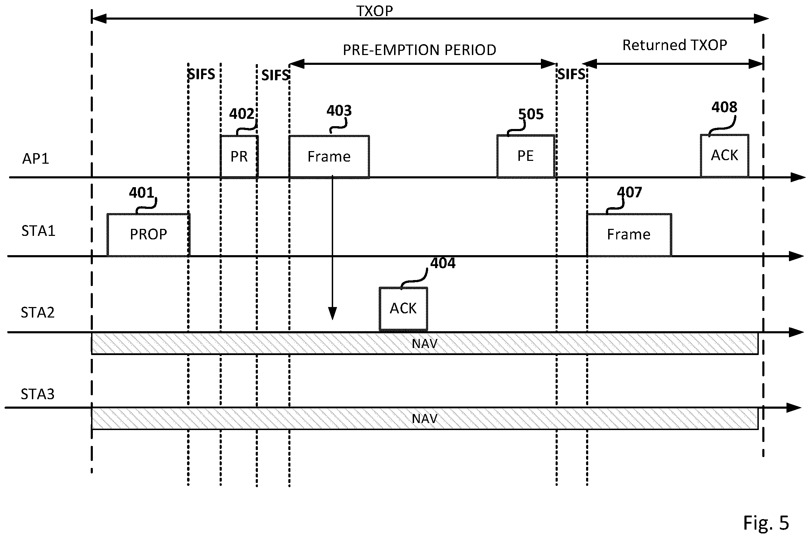

Fig. 5 represents the operation of a variant on the embodiment of Fig. 4. Similarly to the example in Fig. 3, the AP sends frame 505 (PE) at the end of the time period it is using for pre-emption. This signals to the STAs, in particular STA1, that the TXOP has been returned to STA1. STA1 may adjust its NAV, whereas the other STAs will maintain theirs at the value set originally when STA1 acquired the TXOP. STA1 is then able to complete an UL exchange with the AP using frames 407 and 408. The advantage of this variant is that control of the TXOP may be returned earlier to STA1 than the expiry time of the PAD.

In the examples of Figs. 4 and 5, DL frame exchanges have been shown in a simplified form. It should be understood that more frames may be used in practice, such as RTS/CTS and trigger frames (for UL transmissions).

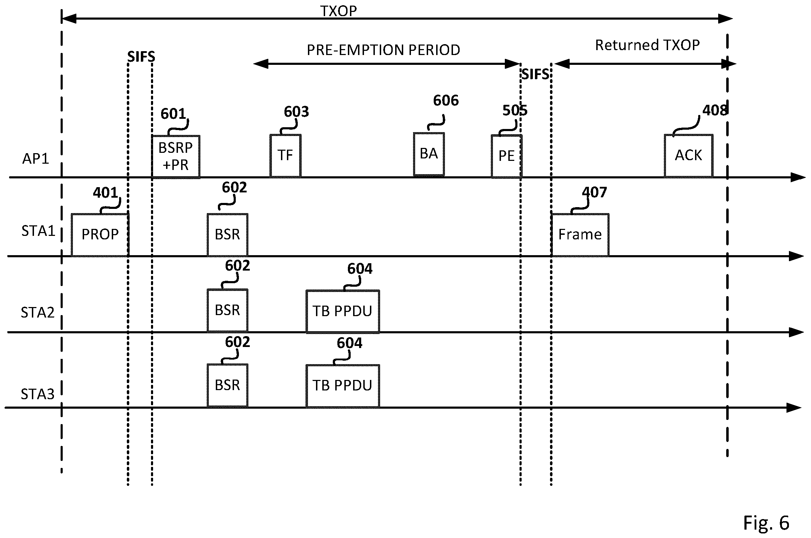

Fig. 6 represents an exemplary operation according to an embodiment which may combined with other embodiments. As in Fig. 4 and 5, STA1 has obtained a TXOP and has transmitted a frame containing a PROP. After a period (e.g. a SIFS), the AP responds with a multi-user frame 601 (BSRP+PR) which contains a request for information on the other STAs data buffers and a pre-emption request (PR). In IEEE 802.11, this is called a Buffer Status Report Poll (BSRP) trigger frame. In the present embodiment, the BSRP is a version of the BSRP modified to carry the PR indication. STAs 1 to 3 respond with frames containing the reports on their respective data buffers in UL MU PPDUs 602 (BSR). Based on the received BSRs 602, the AP sends a trigger frame 603 (TF) which triggers trigger-based UL PPDUs 604, to which the AP responds with a multi-STA BlockAck 606 (BA) and then sends a PE frame 505. As may be seen in the example, only STAs 2 and 3 send UL PPDUs. This is because the AP may determine the priority of the buffered data in each STA from information in the BSRs - for IEEE 802.11, this is the Access Category (AC) bitmap subfield. Based on that determination, the AP only schedules resources for buffered data from STAs 2 and 3 in order to meet the constraints of the time available in the PAD. The remainder of the TXOP is then used by STA1 as described previously. The advantage of extending the BSRP trigger frame to include the PR indication is that the AP may have a greater chance of achieving the UL frame exchanges within the PAD. It should be noted that in a situation where the AP already has the information about the STAs buffers, the AP could send a basic trigger frame as frame 601 and trigger the uplinks directly, thus saving the time used for the BRSP and BSR responses. In a variant of this embodiment, the STAs sending BSRs may include a PR indication.

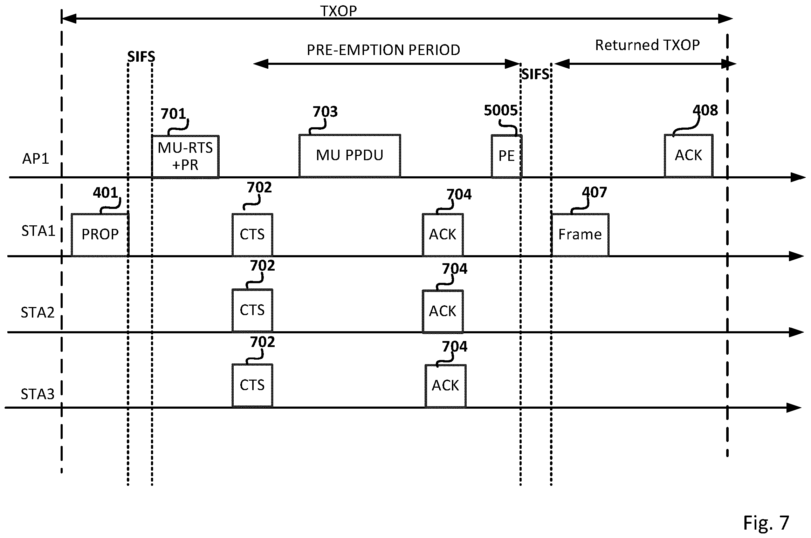

Fig. 7 represents another exemplary operation of an embodiment that may be combined with other embodiments. In response to the PROP frame 401 from STA1, the AP sends an MU-RTS frame 701 carrying a PR indication. This signals that the AP has taken over the TXOP and triggers simultaneous CTS frame responses from the STAs 1,2 and 3. STA1 is shown as responding with a CTS on the basis that, though it was in the process of transmitting, given that it has temporarily ceded control of the TXOP, it may be ready to receive. The AP then sends DL MU PDDU 703 to whichever STAs are concerned and received UL MU PPDUs 704 containing ACKs from the relevant STAs. This embodiment may be of use for a situation where the AP already knows the status of data buffered at the STAs from previous exchanges with them.

Various possibilities exist for inclusion of the PR indication in trigger frames One of the reserved fields in TF such as in Common Info field might be used though other possibilities exist. The PR indication may consist of a single bit acting as a flag. It would only be by STAs when they had already just heard a PROP indication - in other words, it could be just ignored whenever the trigger frames are used in other situations.

In an alternative embodiment, the PR could be indicated/considered asserted by the transmission of any AP frame within time window after PROP/PA frame. It would be convenient to make this time window somewhat longer than interframe space such as the SIFS but shorter than a duration equal to (a SIFS + duration of a short PDDU). The PPDU duration would be that of something like a null-data frame (e.g. a PS-Poll, QoS Null or a sounding NDP). If STA1 were to conform to this embodiment were to hear an AP frame (having a TA equal to that of the AP), they would consider the PR asserted. Otherwise, STA1 would consider itself free to continue to use its TXOP.

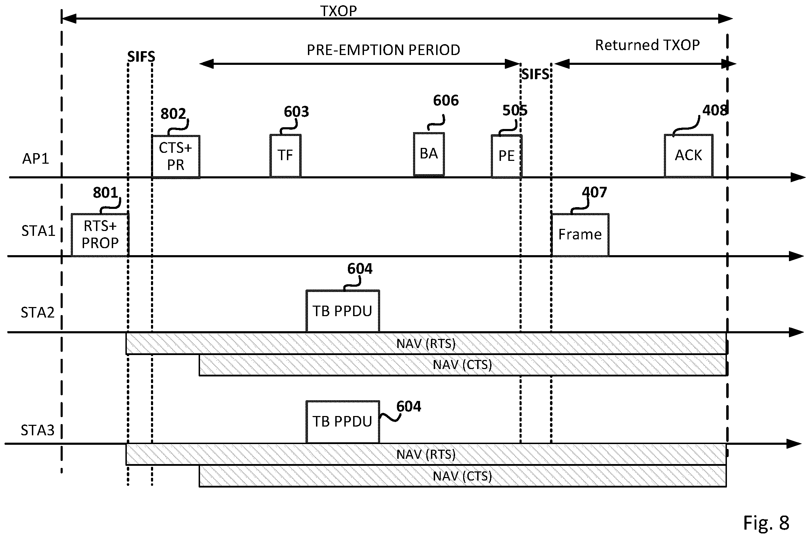

Fig. 8 represents an exemplary operation according to an embodiment where an RTS/CTS exchange has been used by STA1 to obtain the TXOP. An extended RTS frame 801 is sent by STA1. This has the effect of causing STAs 2 and 3 to set their NAVs to the duration of the TXOP (as shown by the hatched bars). The extended RTS contains an extended duration field where part of the field gives the Duration field of the intended PPDU exchange (i.e. that for the TXOP) and part gives the value of the PAD. The AP responds (in this example) with an extended CTS frame 802 which contains an extended duration field and a PR flag bit. The extended Duration field contains the same value as that received in the extended RTS frame 801. Though STAs 2 and 3 have set their NAVs according to the TXOP Duration part of the extended Duration field, because they have detected one or both of the Pre-emption Duration and the PR flag bit, they respond to the AP's trigger frame 603 with MU UL PPDUs 604. The remainder of the frame exchanges are as for Fig. 6 and are not described further - same reference numerals are used, reflecting this.

In an embodiment, a STA may be configured to allow pre-emption on a persistent basis. This may be implemented by having the STA always commencing transmission to obtain a TXOP with a frame containing a PROP indication. Alternatively, the PROP indication may be reduced to a simple flag and the PAD may be set and communicated by the AP in a variant of the PR indication. Such an embodiment may be useful for devices such as IoT devices who are not expected to have high priority data.

According to an embodiment, in asserting a pre-emption request (PR), an AP may base its behaviour in requesting and fulfilling a PROP on the history of TXOP operation by the STA concerned. For example, if there is typically at least a first duration for the gap between the end of one PPDU and the start of the successive PPDU, the AP may consider said duration as sufficient to use for a pre-emptive transmission. Typically, an AP may use pre-emption if it has urgent data with a short deadline to send or it has reason to believe that an associated STA will have such data to send.

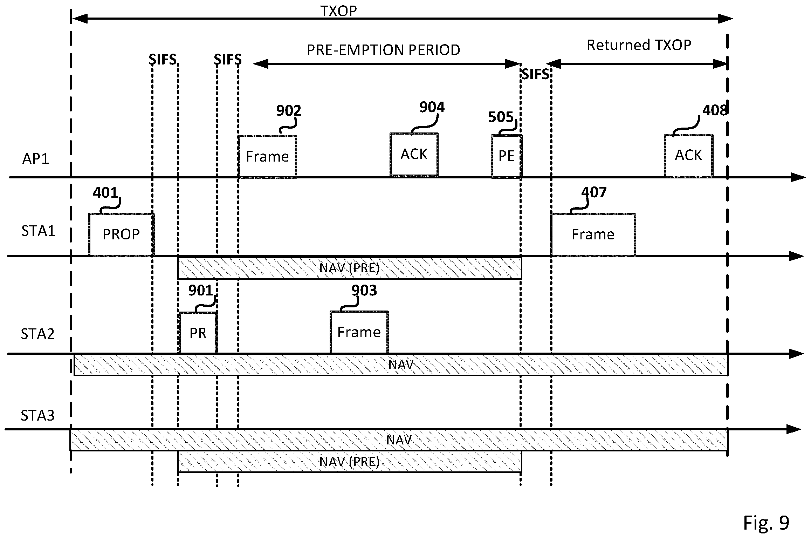

Fig. 9 represents an exemplary operation according to an embodiment where STA2 responds to the frame 401, from STA1 and containing the PROP indication by sending a frame containing a PR indication. The PROP frame sets the TXOP duration. The AP takes over coordination of the pre-emption by sending a frame 902, to which STA2 responds with an UL frame 903. AP then follows with an ACK 905 and a PE frame 505. The rest of the TXOP is used as described previously. In a variant, the frame 901 is an extended RTS frame which uses either the presence of the PAD value in the extended Duration field as a PR indication or uses a PR flag bit. Where the other STAs have multiple NAVs, they may use the PAD duration to set one of the NAVs to ensure the protection of the pre-emption (this could be seen as a 'pre-emption NA V' - NAV (PRE)). The PE frame 505 would have the effect of resetting the NAV (PRE)s. In response to the extended RTS, the AP may respond with an extended CTS.

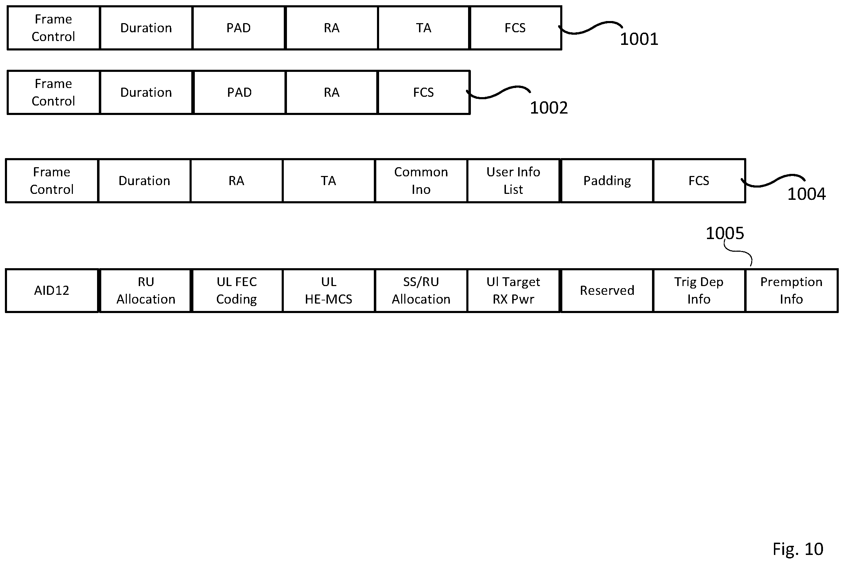

Fig. 10 represents various MAC frame formats according to embodiments. Extended RTS frame 1001 and CTS frame 1002 have the Duration field extended by the addition of a number of bits for the PAD value. A trigger fame format 1004 contains an extended User Info field 1005. The extended User Info field 1005 has a Pre-emption Info added.

## Claims

1. A method of controlling wireless medium access in a wireless network, the network comprising a first device and a second device, the method comprising:
- transmitting by the first device to the second device, a first message containing a pre-emption allowed indication;
- transmitting, during the pre-emption duration, by the second device a second message, the second message containing a pre-emption request, the pre-emption request starting a pre-emption period;
- wherein at least one of the first or second messages contains a pre-emption duration for the pre-emption period;
- wherein the first device is arranged to access the wireless medium upon expiry of the pre-emption duration.

2. The method of claim 1 comprising transmitting, during the pre-emption duration, by the second device, a third message during the pre-emption duration, wherein the third message contains a pre-emption end indication;
- wherein the first device is arranged to access the wireless medium upon the first to occur of the expiry of the pre-emption duration and the reception, by the first device, of the third message.

3. The method of any preceding claim wherein the first device obtains a reservation, the reservation covering a time period containing the pre-emption period.

4. The method of any preceding claim wherein the pre-emption allowed indication is comprised in at least one of a data frame, an RTS frame or a trigger frame.

5. The method of any preceding claim wherein the pre-emption request is comprised in at least one of a data frame, a CTS frame or a trigger frame.

6. The method of any preceding claim, wherein the pre-emption end indication is contained in at least one of a data frame, an ACK frame and a CF-End frame.

7. The method of any preceding claim wherein the pre-emption duration is a fixed value.

8. The method of any preceding claim wherein the pre-emption duration is based on a characteristic of recent or expected traffic.

9. The method of any previous claim wherein, if the pre-emption allowed indication and the pre-emption request both contain a pre-emption duration, the pre-emption duration in the pre-emption allowed indication is used as a maximum value.

10. The method of any previous wherein the pre-emption allowed indication contains a pre-emption start duration
- transmitting, during the pre-emption start duration, by the second device a second message, the second message containing a pre-emption request, the pre-emption request starting a pre-emption period that can be longer than the pre-emption start duration;
- wherein, in the absence of a second message by the second device, the first device is arranged to access the wireless medium upon expiry of the pre-emption start duration.

11. A device (STA1), arranged to control wireless medium access in a wireless network, the network comprising the device and a second device, wherein the first device is arranged to acquire a reservation for access to the wireless medium, the reservation having a reservation period, wherein the first device comprises a processor, wherein the processor is arranged to cause the first device to
- transmit to the second device, a first message containing a pre-emption allowed indication;
- receive, from the second device, a second message, the second message containing a pre-emption request, the pre-emption request starting a pre-emption period, wherein the device is arranged to not initiate access to the wireless medium during the pre-emption period;
- wherein at least one of the first or second messages contains a pre-emption duration for the pre-emption period, wherein the pre-emption period lies within the reservation period;
- wherein the first device is arranged to access the wireless medium upon expiry of the pre-emption duration.

12. The first device of claim 11 wherein the processor is arranged to cause the device to
- receive, from the second device, during the pre-emption period, a third message during the pre-emption duration, wherein the third message contains a pre-emption end indication;
- wherein the first device is arranged to access the wireless medium upon the first to occur of the expiry of the pre-emption duration and the reception of the third message.

13. A computer program product, storable on a computer-readable medium and arranged, when run a computer to execute the method of any of claims 1 - 10.
